# EUROPEAN PATENT APPLICATION

(11) **EP 2 058 653 A1**
(43) Date of publication of application: **13.05.2009**
(21) Application number: 07828731.5
(22) Date of filing: 28.09.2007
(51) Int. Cl.: G01N 27/419, G01N 27/416

(54) **GAS SENSOR ELEMENT TREATMENT METHOD**

(30) Priority: 29.09.2006 JP 2006268729
(71) Applicant: NGK INSULATORS, LTD., Nagoya-shi, Aichi 467-8530 (JP)
(72) Inventor: NAKAGAKI, Kunihiko, Nagoya-shi Aichi 467-8530 (JP); LEE, San Jae, Nagoya-shi Aichi 467-8530 (JP); MASUO, Sumiko, Nagoya-shi Aichi 467-8530 (JP)
(74) Representative: Paget, Hugh Charles Edward
(86) International application number: PCT/JP2007/068990
(87) International publication number: WO 2008/038773

(57) **Abstract**

A gas sensor element is heated at a temperature of 500°C or higher for 15 minutes or more in a treatment atmosphere containing one or more gases selected from the gas group consisting of nitrogen (N₂), oxygen (O₂), carbon monoxide (CO), hydrogen (H₂) and hydrocarbons (HC) and giving an air ratio of 0.80 to 1.10. In a gas sensor element to which such a treatment has been applied, a stable output is obtained without causing overshoot to an actual NOx concentration (input) even when a rapid exhaust gas change takes place.

## Description

### TECHNICAL FIELD

The present invention relates to a method for treatment of a gas sensor element, conducted for stabilization of its dynamic characteristics.

### BACKGROUND ART

Nitrogen oxide (NOx) causes air pollution, acid rain and photochemical smog and has adverse effects on human beings and other creatures. Therefore, the environmental quality standards have been set on the concentration of NOx. In big cities, however, there is an inundation of automobiles which emit exhaust gases and the standards may be exceeded. Accordingly, the reduction in the NOx concentration in automobile exhaust gas is regarded to be a very important task. In such a situation, success in practical use of superior nitrogen oxide (NOx) sensor allowing for direct measurement of NOx concentration in automobile exhaust gas will enable the control of engine operation during driving, depending upon the NOx concentration measured, or the detection of extent of catalyst deterioration, and such success is highly preferred for NOx reduction.

Under such a situation, development works of NOx sensor have been conducted. There are various types of NOx sensors. As one of these, there is known an NOx sensor having a gas sensor element which contains an electrochemical cell formed by laminating, on a solid electrolyte, a measurement electrode made of a cermet composed of a noble metal material capable of reducing or decomposing a gas to be measured component having bonded oxygen, present in a gas to be measured and a ceramic material (see a non-patent document 1).

Non-patent document 1: home page of the Ministry of Environment,
http://www.env.go.jp/policy/digest/h16/pdf/mat18.pdf, Study on Practical Application of On-Vehicle NOx Sensor and Utilization of Technique Thereof

### DISCLOSURE OF THE INVENTION

Various experiments have been made on conventional NOx sensor having the above-mentioned structure. As a result, it was found that, with the conventional NOx sensor of such a type, the output characteristics was not stable in a rapid atmosphere change during automobile operation, and, in some cases, an output higher than the actual NOx value was indicated and the accuracy of measurement was low. Specifically, when an NOx sensor was fitted to the exhaust gas system of diesel engine and the NOx in exhaust gas was measured, it was found that, although the measurement accuracy was good in a steady-state operation, the NOx sensor indicated an excessive output, for example, when the fuel was cut or when the rich spike for NOx occlusion reduction catalyst was generated. Particularly when no NOx was present actually (NOx concentration was zero), the measurement accuracy tended to be low.

The present invention has been made in view of such a situation, and aims at providing an NOx sensor capable of showing, in an actual automobile, a stable output to the actual NOx concentration (input) without causing overshoot even when there is a rapid exhaust gas atmosphere change caused by fuel cut, rich spike or the like.

It was made clear by various studies that the excessive output relative to input (actual NOx concentration), indicated by NOx sensor was due to the unstable dynamic characteristics of the NOx sensor to the water content present in exhaust gas. It was also found that, when the electrode of the NOx sensor was subjected to a high temperature atmosphere treatment, the dynamic characteristics of the NOx sensor was stable even when there was a rapid exhaust gas atmosphere change. The findings have led to the completion of the present invention. Specifically, the present invention provides the following means in order to achieve the above aim.

First, the present invention provides:
in a gas sensor element wherein an electrochemical cell is constituted by forming, on a given solid electrolyte, a measurement electrode made of a cermet composed of a noble metal material capable of reducing or decomposing a gas to be measured component having bonded oxygen, present in a gas to be measured and a ceramic material, the gas to be measured component is reduced or decomposed by the measurement electrode, the amount of oxygen generated by the reduction or decomposition of the gas to be measured component is measured, and there is determined, based on the measured amount of oxygen, the concentration of the gas to be measured component in the gas to be measured, a method for treatment of gas sensor element for improving the gas measurement characteristics, which method comprises heating the gas sensor element at a temperature of 500°C or higher for 15 minutes or more in a treatment atmosphere in which one or more gases selected from the gas group consisting of nitrogen (N₂), oxygen (O₂), carbon monoxide (CO), hydrogen (H₂) and hydrocarbons (HC) are contained and an air ratio is kept within a range of 0.80 to 1.10.

The hydrocarbons (HC) specifically indicate substances represented by chemical formula CₓH_{y}, such as methane (CH₄), propylene (C₃H₆), propane (C₃H₈), C₅H₁₀ (e.g. cyclopentane), C₅H₁₂ (e.g. isopentane) and the like.

In the method for treatment of gas sensor element, of the present invention, the gas to be measured component is preferably nitrogen oxide. In this case, the gas sensor element to be treated is an NOx sensor element.

In the method for treatment of gas sensor element, of the present invention, it is preferred that the heating is conducted at a temperature of 600°C or higher for 20 minutes or more in a treatment atmosphere giving an air ratio of 0.80 to 0.9999. It is particularly preferred that the heating is conducted at a temperature of 600 to 1,100°C for 20 minutes to 24 hours in a treatment atmosphere giving an air ratio of 0.90 to 0.9999.

The reason for the treatment temperature of gas sensor element, of 500°C or more is that the treatment temperature can be allowed to be in the temperature range in which the gas sensor element is actually used. When the heat treatment is conducted at a temperature lower than 500°C, it is unable to sufficiently achieve the intended improvement of the dynamic characteristics of the gas sensor element. Incidentally, when the temperature of heat treatment of gas sensor element exceeds 1,100°C, such a temperature is unnecessarily high because the energy efficiency relative to the effect obtained is low.

The treatment of gas sensor element is conducted continuously for 15 minutes or more. When the heat treatment time is extremely short, for example, shorter than 15 minutes, the improvement of dynamic characteristics of gas sensor element is not sufficient. Incidentally, when the heat treatment is conducted for long time such as more than 24 hours, the heat treatment becomes too long, strikingly impairing the efficiency of heat treatment and resultantly the productivity of heat-treated gas sensor element.

Next, the present invention provides a gas sensor element to which any of the above-mentioned methods for treatment of gas sensor element has been applied for improving the gas measurement characteristics. When the gas to be measured component is nitrogen oxide, the gas sensor element is an NOx sensor element and the sensor using the element is an NOx sensor.

The gas sensor element to be treated by the method for treatment of gas sensor element, of the present invention, and the gas sensor element of the present invention contain an electrochemical cell constituted by forming, on a given solid electrolyte, a measurement electrode made of a cermet composed of a noble metal material and a ceramic material.
As the noble metal material, there is appropriately used a noble metal material which can reduce or decompose a gas to be measured component having bonded oxygen (e.g. NOx) present in a gas to be measured and which has been used as a constituent material of cermet electrode. Specific examples of the noble metal material include Rh, Pd, Pt, an alloy of Rh and Pt, and an alloy of Pt and Pd.

The ceramic material may be such that can form a sintered material (cermet) with the above-mentioned noble metal material and that is generally used as a constituent material of cermet electrode. As the ceramic material, there is used, for example, ZrO₂. Further, as the solid electrolyte, there is used ZrO₂ which has been used in gas sensor elements for its oxygen ion conductivity.

In the method for treatment of gas sensor element, of the present invention, the gas sensor element is heated at a temperature of 500°C or higher for 15 minutes or more in a treatment atmosphere containing one or more gases selected from the gas group consisting of nitrogen (N₂), oxygen (O₂), carbon monoxide (CO), hydrogen (H₂) and hydrocarbons (HₓC_{y}) and giving an air ratio of 0.80 to 1.10. Therefore, the dynamic characteristics of the gas sensor element to water content are stabilized, resulting in stabilized output characteristics. There is no overshoot to the actual gas concentration (input).

When there is fitted, to the exhaust gas system of diesel engine, an NOx sensor using, for example, an NOx sensor element to which the method for treatment of gas sensor element, of the present invention has been applied and the NOx in an exhaust gas is measured, the NOx can be measured at a high accuracy not only in steady-state operation but also in rapid atmosphere change such as fuel cut or the like. For example, when no NOx is present actually (NOx concentration is zero), no excessive output exhibited an abnormal output of NOx. An output which is nearly agreeable to a value of the chemical luminescence detection (CLD) method, can always be obtained for any input (NOx concentration).

With an NOx sensor using an NOx sensor element to which the method for treatment of gas sensor element, of the present invention has been applied, the concentration of NOx in automobile exhaust gas can be measured directly, at real time, at a high accuracy, and stably; therefore, the optimum control of automobile engine operation and catalyst is possible and the level of deterioration of catalyst can be detected, which greatly contributes to the reduction of NOx discharged from automobiles.

In a preferred embodiment of the method for treatment of gas sensor element, of the present invention, the heating is conducted at a temperature of 600°C or higher for 20 minutes or more in a treatment atmosphere giving an air ratio of 0.80 to 0.9999; therefore, the heat treatment of gas sensor element in treatment atmosphere is carried out more efficiently and reliably and the improvement of the gas measurement characteristics of gas sensor element becomes more effective.

### BRIEF DESCRIPTION OF THE DRAWINGS

Fig. 1 is a sectional view showing an embodiment of NOx sensor element.
Fig. 2 is a graph showing the result of Example, which indicates the change of the NOx value measured by NOx sensor element when the water content in gas to be measured (air) was changed.
Fig. 3 is a graph showing the result of Example, which indicates the changes of the NOx values measured by NOx sensor element and chemical luminescence detection apparatus when the engine operation state was changed from rotation speed of 2,000 rpm to idling state (Idling).
Fig. 4 is a graph showing the result of Example, which indicates the changes of the NOx values measured by NOx sensor element and chemical luminescence detection apparatus when the engine operation state was changed from rotation speed of 2,000 rpm to idling state (Idling).
Fig. 5 is a graph showing the result of Example, which indicates the excessive outputs of NOx values measured by NOx sensor element when the engine operation state was changed from rotation speed of 2,000 rpm to idling state (Idling).
Fig. 6 is a graph showing the result of Example, which indicates the excessive outputs of NOx values measured by NOx sensor element when the engine operation state was changed from rotation speed of 2,000 rpm to idling state (Idling).

### EXPLANATION OF NUMERAL SYMBOLS

1...NOx sensor element, 10...solid electrolyte body, 12 ...first diffusion-determining portion, 14...first inside space, 16...second diffusion-determining portion, 18...second inside space, 20...reference air introduction passage, 22... first solid electrolyte body portion, 24...inner pump electrode, 26...outer pump electrode, 28...main pump cell, 30...second solid electrolyte body portion, 32...measurement electrode, 34...reference electrode, 36...pump cell for measurement, 38...oxygen partial pressure detection cell, 40...heater.

### BEST MODE FOR CARRYING OUT THE INVENTION

Embodiments of the present invention are described below referring as necessary to the accompanying drawings. However, it should not be construed that the present invention is restricted to the following embodiments. Various changes, modifications, improvements and substitutions can be made thereto based on the knowledge possessed by those skilled in the art, as long as the gist of the present invention is not impaired thereby. For example, the drawings indicate preferred embodiments of the present invention, but the present invention is not restricted by the embodiments or information indicated by or in the drawings. In order to carry out or verify the present invention, the means same as or equal to one described in the present description can be used; however, preferred means is one described below.

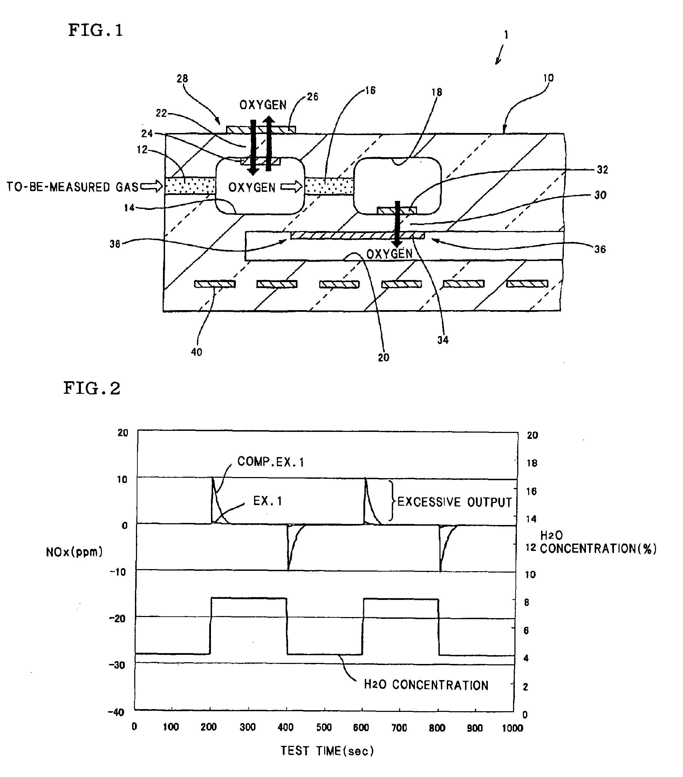

First, description is made on the gas sensor element to be treated by the method for treatment of gas sensor element, of the present invention. Fig. 1 is a sectional view showing an embodiment of NOx sensor element which is a gas sensor element wherein the gas to be measured component is nitrogen oxide.

The NOx sensor element 1 shown in Fig. 1 has a solid electrolyte (e.g. ZrO₂) body 10 having oxygen ion conductivity. In the NOx sensor element 1 are provided a first inside space 14 communicating with outside at the front end side of the solid electrolyte body 10 via a first diffusion-determining portion 12; a second inside space 18 communicating with the first inside space 14 via a second diffusion-determining portion 16; and a reference air introduction passage 20, which has an opening at the base side of the solid electrolyte body 10 and communicates with the air.

In the NOx sensor element 1, a gas to be measured present outside the solid electrolyte body 10 is introduced into the first inside space 14 at a given diffusion resistance via the first diffusion-determining portion 12; and the gas to be measured in the first inside space 14 is introduced into the second inside space 18 at a given diffusion resistance. Meanwhile, reference air is introduced into the reference air introduction passage 20 through the opening which is at the base side of the solid electrolyte body 10.

In the NOx sensor element 1, there is formed an electrochemical cell consisting of a first solid electrolyte body portion 22 of the solid electrolyte body 10, which is a portion forming the first inside space 14, an inner pump electrode 24 formed on the area of the first solid electrolyte body portion 22, exposed to the first inside space 14, and an outer pump electrode 26 formed on the area of the first solid electrolyte body portion 22, exposed to an outside space; and this electrochemical cell constitutes a main pump cell 28. There is further formed an electrochemical cell consisting of a second solid electrolyte body portion 30 which separates the second inside space 18 and the reference air introduction passage 20, a measurement electrode 32 formed on the area of the second solid electrolyte body portion 30, exposed to the second inside space 18, and a reference electrode 34 formed on the area of the second solid electrode body portion 30, exposed to the reference air introduction passage 20; and this electrochemical cell constitutes a pump cell 36 for measurement. Furthermore, the first and second solid electrolyte body portions 22 and 30, the inner pump electrode 24 and the reference electrode 34 form an electrochemical cell and this electrochemical cell constitutes an oxygen partial pressure detection cell 38. Heaters 40 heat the NOx sensor element 1.

In the NOx sensor element 1, a given voltage is applied between the two electrodes 24 and 26 of the main pump cell 28 by a variable electric source not shown, to allow an electric current to flow in a given direction; thereby, the oxygen in the gas to be measured in the fist inside space 14 is pumped out to an outside space where the gas to be measured is present, or conversely oxygen is pumped into the first inside space 14 from the outside space where the gas to be measured is present. Also, a voltage is generated between the two electrodes 24 and 34 of the oxygen partial pressure detection cell 38 based on the difference in oxygen concentration between the gas to be measured in the first inside space 14 and the reference air in the reference air introduction passage 20, and the voltage is measured by a given potentiometer (not shown) or the like. Further, a given voltage is applied by a constant-voltage electric source not shown, between the two electrodes 32 and 34 of the pump cell 36 for measurement, whereby the oxygen in the gas to be measured in the second inside space 18 is pumped out to the reference air introduction passage 20. The measurement electrode 32 of the pump cell 36 for measurement is constituted by a porous cermet made of a noble metal material such as rhodium (Rh) or the like, capable of reducing or decomposing, in particular, NOx and a ceramic material such as zirconia (ZrO₂) or the like, and functions as a catalyst for NOx reduction or decomposition.

In the NOx sensor element 1, oxygen is pumped into or pumped out from the first inside space 14 by the pumping action of the pump cell 28; the voltage of the variable electric source, applied between the two electrodes 24 and 26 of the main pump cell 28 is controlled based on the value of the oxygen partial pressure in the first inside space 14, detected by the oxygen partial pressure detection cell 38; thereby, the oxygen partial pressure in the gas to be measured in the first inside apace 14 is controlled at a predetermined (desirably low) level at which no NOx reduction takes place. The gas to be measured in the first inside space 14, whose oxygen partial pressure has been controlled, is introduced into the second inside space 18 through the second diffusion-determined passage 16; in the second inside space 18, the NOx in the gas to be measured is reduced by the measurement electrode 32 functioning as a catalyst for NOx reduction or decomposition; and the oxygen generated thereby is pumped out to the reference air introduction passage 20 from the second inside space 18. At this time, since the oxygen partial pressure (oxygen concentration) in the gas to be measured in the first inside space 14 is controlled at a predetermined level, a pump electric current proportional to the concentration of NOx flows between the measurement electrode 32 and the reference electrode 34, of the pump cell for measurement. Accordingly, by measuring the value of the pump electric current, the NOx concentration in the gas to be measured can be determined.

Incidentally, NOx sensor element may also be constituted as follows. As in the NOx sensor element 1, there are provided an electrochemical cell having a main pump cell 28 and an oxygen partial pressure detection cell 38, the cooperative action of the two cells controls the oxygen partial pressure (oxygen concentration) of a gas to be measured introduced into a first inside space 14, at a predetermined level, and in this state the gas to be measured is introduced into a second inside space 18. However, the pump cell 36 for measurement, used in the NOx sensor element 1 is replaced by an oxygen partial pressure detection cell for measurement, which is constituted by an electrochemical cell consisting of a measurement electrode 32, a reference electrode 34 and a second solid electrolyte body portion 30; there is measured a voltage which is generated between the two electrodes 32 and 34 of the oxygen partial pressure detection cell for measurement, based on the difference in oxygen concentration between the gas to be measured in the second inside space 18 and the reference air in a reference air introduction passage 20; and, based on the measured voltage, an NOx concentration in the gas to be measured is determined. Even such an NOx sensor element is regarded as a gas sensor element to which the method for treatment of gas sensor element, of the present invention can be applied.

### EXAMPLES

Next, representative Examples of the present invention are shown to clearly indicate the characteristics and effects of the present invention. The present invention is in no way restricted by the description of the following Examples.

There were prepared 58 NOx sensors having the same specification as the NOx sensor element 1 shown in Fig. 1, each of which had an electrochemical cell obtained by forming, on a ZrO₂-made solid electrolyte, a measurement electrode composed of a porous cermet of Rh and ZrO₂ and functioning as an NOx reduction or decomposition catalyst.

### (Example 1)

One NOx sensor element was subjected to a heat treatment at 700°C for 2 hours in a treatment atmosphere containing carbon monoxide (CO) gas and giving an air ratio λ of 0.90. A metal pipe was prepared and the heat-treated NOx sensor element was fitted to one open end (outlet side) of the metal pipe.

### (Comparative Example 1)

One NOx sensor element was fitted to one outlet side of a metal pipe, per se without being subjected to the above-mentioned heat treatment.

Then, air was fed into the other open end (inlet side) of the metal pipe with the water content (H₂O) in the air being changed, and the change of the NOx values measured by each NOx sensor element was examined. The results are shown in Fig. 2.

### (Example 2)

Four NOx sensor elements (samples 1, 2, 3 and 4) were subjected to a heat treatment at 600°C for 1 hour in a treatment atmosphere containing methane (CH₄) gas and giving an air ratio λ of 0.999. Each of the heat-treated NOx sensor elements was fitted to the exhaust pipe of a diesel engine having a total displacement or 2,000 cc.

### (Comparative Example 2)

Two NOx sensor elements (samples 1 and 2) were each fitted to the exhaust pipe of a diesel engine having a total displacement of 2,000 cc, per se without being subjected to the above-mentioned heat treatment.

### (Reference Example)

An exhaust gas emitted from a diesel engine having a total displacement of 2,000 cc was introduced into a chemical luminescence detection (CLD) apparatus (Model MEXA-9100, a product of HORIBA, Ltd.), and the NOx concentration in the exhaust gas was measured.

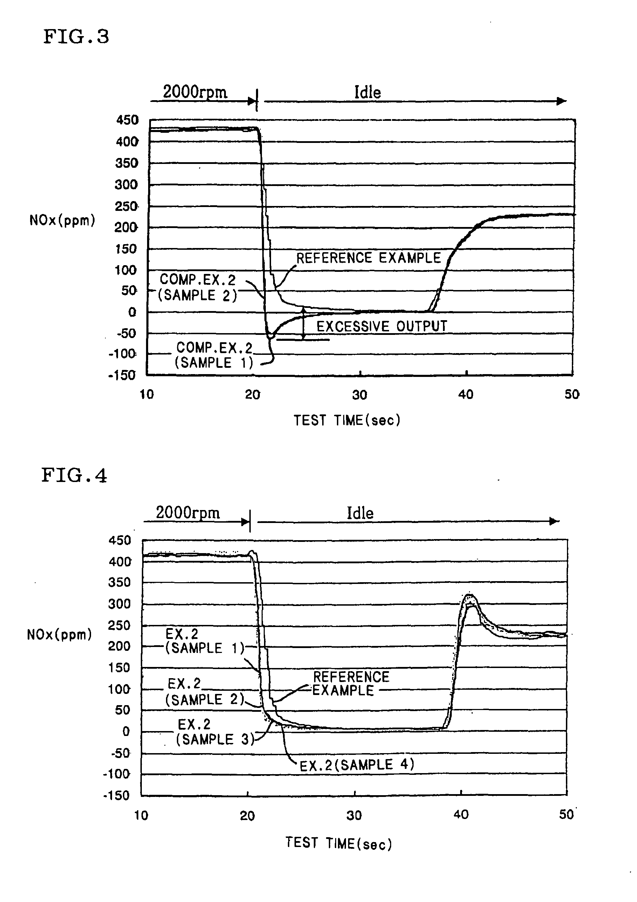

Then, the engine was operated, the rotation was changed from 2,000 rpm to idling state (Idling), and the change of measured NOx values in each NOx sensor element or the chemical luminescence detection apparatus was examined. The results are shown in Figs. 3 and 4.

### (Example 3)

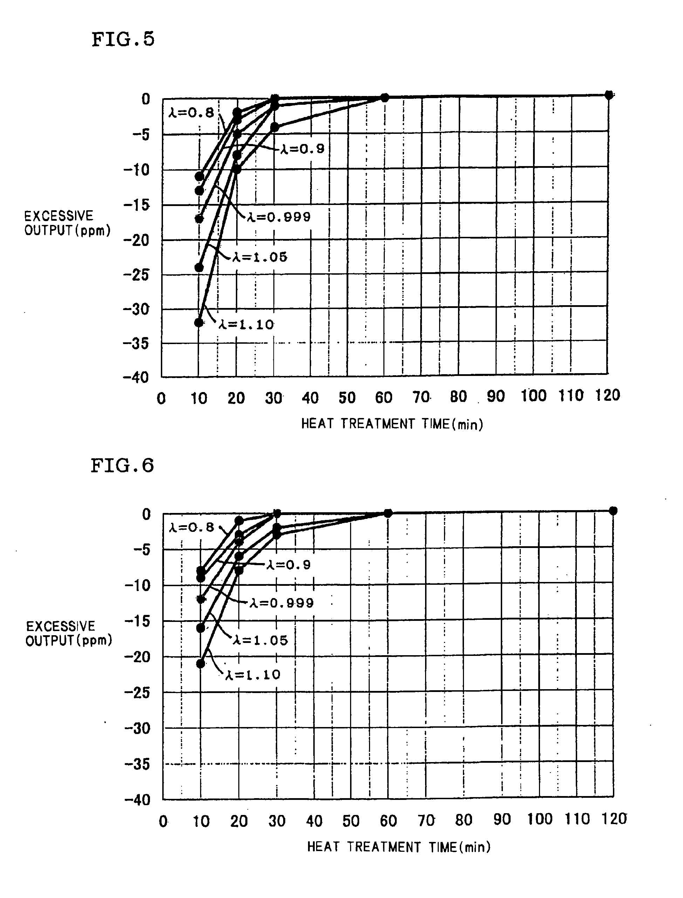

Twenty five NOx sensor elements were subjected to a heat treatment at constant temperature of 500°C while changing air ratios λ and time lengths in a treatment atmosphere containing propane (C₃H₈) gas. The air ratios λ were 5 kinds of 0.8, 0.9, 0.999, 1.05 and 1.10 and the heating times were 5 kinds of 10 minutes, 20 minutes, 30 minutes, 1 hour (60 minutes) and 2 hours (120 minutes); therefore, the combinations were 25 (= 5x5) and 25 NOx sensor elements were used. Each of the heat-treated NOx sensor elements was fitted to the exhaust pipe of a diesel engine having a total displacement of 2,000 cc, the engine was operated, the rotation was changed from 2,000 rpm to idling state (Idling) and, in this rpm change, the excessive outputs of the NOx values measured in each NOx sensor element were examined. The results are shown in Fig. 5.

### (Example 4)

Twenty five NOx sensor elements were subjected to a heat treatment at constant temperature of 500°C while changing air ratios λ and time lengths in a treatment atmosphere containing propane (C₃H₈) gas. The air ratios λ were 5 kinds of 0.8, 0.9, 0.999, 1.05 and 1.10 and the heating times were 5 kinds of 10 minutes, 20 minutes, 30 minutes, 1 hour (60 minutes) and 2 hours (120 minutes); therefore, the combinations were 25 (= 5x5) and 25 NOx sensor elements were used. Each of the heat-treated NOx sensor elements was fitted to the exhaust pipe of a diesel engine having a total displacement of 2,000 cc, the engine was operated, the rotation was changed from 2,000 rpm to idling state (Idling) and, in this rpm change, the excessive outputs of the NOx values measured in each NOx sensor element were examined. The results are shown in Fig. 6.

### (Discussion)

As is clear from the graph of Fig. 2, the NOx sensor element subjected to the method for treatment of gas sensor element, of the present invention is stable in the dynamic characteristics to water content and shows the results of measurement that no presence of NOx is calculated by excessive output in a state of no actual presence of NOx (NOx concentration is zero).

The NOx sensor element not subjected to the method for treatment of gas sensor element, of the present invention shows a pseudo change of NOx concentration even when there is the change of water content alone. However, such erroneous measurement can be prevented by applying the method for treatment of gas sensor element, of the present invention.

As is clear from the graphs of Figs. 3 and 4, the NOx sensor element subjected to the method for treatment of gas sensor element, of the present invention is stable in the dynamic characteristics and causes no overshoot to the actual NOx concentration even when the engine rotation changes from 2,000 rpm to idling state (Idling) and the rapid change of exhaust gas takes place. When there is substantially no NOx in idling, the measurement result of NOx follows that state faithfully and becomes 0 ppm.

In the NOx sensor element not subjected to the method for treatment of gas sensor element, of the present invention, when the engine rotation changes from 2,000 rpm to idling state (Idling) and the rapid change of exhaust gas takes place, the NOx concentration measured swings to the minus side for a certain time; however, by applying, to the NOx sensor element, the method for treatment of gas sensor element, of the present invention, such an excessive output is prevented and there can be reliably obtained, for the input (NOx concentration), an output which is approximately identical to the result of the Reference Example by chemical luminescence detection (CLD) method.

As is clear from the results of Figs. 5 and 6, which show one example of conditions to suppress or prevent excessive output, in order to suppress the excessive output at -10 ppm or less, it is necessary to employ an air ratio of 0.80 to 1.10, a temperature of 500°C or higher and a heating time of 20 minutes or more, or, when the heating time is 10 minutes, to employ an air ratio of 0.80 to 0.90 and a temperature of 600°C or higher. Also, in order to suppress the excessive output at -5 ppm or less, it is necessary to employ an air ratio of 0.80 to 1.10, a temperature of 500°C or higher and a heating time of 30 minutes or more, or, when the heating time is 20 minutes, to employ an air ratio of 0.80 to 0.999 and a temperature of 500°C or higher. Further, in order to suppress the excessive output at 0 ppm, it is necessary to employ an air ratio of 0.80 to 1.10, a temperature of 500°C or higher and a heating time of 60 minutes or more.

### INDUSTRIAL APPLICATION

The method for treatment of gas sensor element, of the present invention can be suitably used as a means for stabilization of the dynamic characteristics of a nitrogen oxide (NOx) sensor which measures the NOx concentration in automobile exhaust gas.

## Claims

1. A method for treatment of gas sensor element; for improvement of its gas measurement characteristics, in a gas sensor element wherein an electrochemical cell is constituted by forming, on a given solid electrolyte, a measurement electrode made of a cermet composed of a noble metal material capable of reducing or decomposing a gas to be measured component having bonded oxygen, present in a gas to be measured and a ceramic material, the gas to be measured component is reduced or decomposed by the measurement electrode, the amount of oxygen generated by the reduction or decomposition of the gas to be measured component is measured, and there is determined, based on the measured amount of oxygen, the concentration of the gas to be measured component in the gas to be measured,
wherein the method comprises heating the gas sensor element at a temperature of 500°C or higher for 15 minutes or more in a treatment atmosphere in which one or more gases selected from the gas group consisting of nitrogen (N₂), oxygen (O₂), carbon monoxide (CO), hydrogen (H₂) and hydrocarbons (HC) are contained and an air ratio is kept at in a range of from 0.80 to 1.10.

2. A method for treatment of gas sensor element according to Claim 1, wherein the gas to be measured component is nitrogen oxide.

3. A method for treatment of gas sensor element according to Claim 1 or 2, wherein the heating is conducted at a temperature of 600°C or higher for 20 minutes or more in a treatment atmosphere giving an air ratio of 0.80 to 0.9999.

4. A gas sensor element to which the method for treatment of gas sensor element according to any of Claims 1 to 3 has been applied for improvement of its gas measurement characteristic.
